# EUROPEAN PATENT APPLICATION

(11) **EP 4 818 002 A1**
(43) Date of publication of application: **07.10.2026**
(21) Application number: 24899176.2
(22) Date of filing: 12.06.2024
(51) Int. Cl.: B62D 21/02, B62D 25/08, B62D 25/20, B60K 1/04

(54) **VEHICLE FRAME, VEHICLE FRAME ASSEMBLY AND VEHICLE**

(30) Priority: 05.12.2023 CN 202311663120
(71) Applicant: Contemporary Amperex Intelligence Technology (Shanghai) Limited, Shanghai 200120 (CN)
(72) Inventor: SUN, Lei, Shanghai 200120 (CN); DU, Lei, Shanghai 200120 (CN); XIAO, Sa, Shanghai 200120 (CN); QIN, Wenzong, Shanghai 200120 (CN); GAO, Lei, Shanghai 200120 (CN); JIAO, Haiyang, Shanghai 200120 (CN); ZHANG, Wenhao, Shanghai 200120 (CN); GAO, Long, Shanghai 200120 (CN); WANG, Yi, Shanghai 200120 (CN)
(74) Representative: Gong, Jinping
(86) International application number: PCT/CN2024/098733
(87) International publication number: WO 2025/118524

(57) **Abstract**

A vehicle frame (10), a vehicle frame assembly (2), and a vehicle (1) are provided. The vehicle frame (10) includes a front cabin body (200), a rear cabin body (300), and a middle cabin body (100). The front cabin body (200) is integrally formed. The rear cabin body (300) is integrally formed. The middle cabin body (100) is integrally formed; and in a length direction of the middle cabin body (100), the front cabin body (200) and the rear cabin body (300) are located on two sides of the middle cabin body (100), and the middle cabin body (100) is connected to the front cabin body (200) and the rear cabin body (300). In this way, with each of the front cabin body (200), the middle cabin body (100), and the rear cabin body (300) being integrally formed, manufacturing efficiency for the front cabin body (200), the middle cabin body (100), and the rear cabin body (300) can be improved by means of the integrated configuration manner, and a quantity of parts and components of the vehicle frame (10) is reduced. This reduces assembly processes such as welding and riveting during a manufacturing process, improves production efficiency, and can further improve structural strength of the front cabin body (200), the middle cabin body (100), and the rear cabin body (300). The middle cabin body (100) is connected to the front cabin body (200) and the rear cabin body (300) to form the vehicle frame (10), so that a production process chain can be shortened, and flexible layout in a production workshop is facilitated. In this way, manufacturing efficiency for a whole vehicle can be improved.

## Description

This application claims priority to Chinese Patent Application No. 2023116631205, filed on December 5, 2023 and entitled "VEHICLE FRAME, VEHICLE FRAME ASSEMBLY, AND VEHICLE", which is incorporated herein by reference in its entirety.

### TECHNICAL FIELD

This application relates to the field of vehicle technologies, and in particular, to a vehicle frame, a vehicle frame assembly, and a vehicle.

### BACKGROUND

With rapid development of the automobile industry, automobiles have become one of indispensable means of transportation for people. A quantity of automobiles in possession increases year by year, and more people own private cars, bringing development to the manufacturing and design of parts and components of automobiles due to popularity of the automobiles.

A vehicle frame structure is one of important components of an automobile. In existing technical solutions, a vehicle frame structure is often formed by performing operations such as welding on a large number of sheet metal parts and components. However, there is a long process for this forming method, leading to an extended overall vehicle manufacturing cycle. In addition, an accumulated manufacturing error from a large number of parts and components is large, making it difficult to adapt to the rapid iteration pace of vehicles in terms of manufacturing efficiency and quality.

### SUMMARY

A main objective of this application is to provide a vehicle frame, a vehicle frame assembly, and a vehicle, to resolve the above technical problems existing in the conventional technology.

To resolve the above problems, this application provides a vehicle frame. The vehicle frame includes a front compartment body, a rear compartment body, and a middle compartment body. The front compartment body is integrally formed. The rear compartment body is integrally formed. The middle compartment body is integrally formed; and in a length direction of the middle compartment body, the front compartment body and the rear compartment body are located on two sides of the middle compartment body, and the middle compartment body is connected to the front compartment body and the rear compartment body. In this way, with each of the front compartment body, the middle compartment body, and the rear compartment body being integrally formed, manufacturing efficiency for the front compartment body, the middle compartment body, and the rear compartment body can be improved by means of the integrated configuration manner, and a quantity of parts and components of the vehicle frame is reduced. This reduces assembly processes such as welding and riveting during a manufacturing process, improves production efficiency, and can further improve structural strength of the front compartment body, the middle compartment body, and the rear compartment body. The middle compartment body is connected to the front compartment body and the rear compartment body to form the vehicle frame, so that a production process chain can be shortened, flexible layout in a production workshop is facilitated, and a risk of a manufacturing error may be further alleviated in comparison with a solution of forming by assembling many parts. In this way, manufacturing efficiency for a whole vehicle may be improved.

In some embodiments, an accommodating space and a mounting space are formed in the middle compartment body, an opening of the mounting space is provided back away from an opening of the accommodating space in a height direction of the middle compartment body, the accommodating space is used for accommodating a battery cell, and the mounting space is used for mounting a vehicle-mounted component. In this way, with both the accommodating space and the mounting space being formed in the middle compartment body, mounting and cooperation of the vehicle-mounted component and the vehicle frame, and mounting of a battery cell on the vehicle frame are facilitated. A CTC technical strategy is used to break through a traditional battery pack process, reducing a quantity of parts and components, saving a space, improving structural efficiency, significantly reducing a vehicle weight, increasing battery endurance mileage, and the like.

In some embodiments, the middle compartment body includes a middle compartment panel and an enclosing structure, the middle compartment panel is provided with a first surface and a second surface that are provided back away from each other in the height direction, the enclosing structure protrudes from the first surface in the height direction to form the mounting space, and the enclosing structure protrudes from the second surface in the height direction to form the accommodating space. In this way, with the enclosing structure protruding from the first surface and the second surface of the middle compartment panel, the accommodating space and the mounting space are formed. This can simplify a manner of forming the accommodating space and the mounting space, facilitate mounting and cooperation of a vehicle-mounted component and the vehicle frame, and help seal the accommodating space through cooperation of a cover plate with the enclosing structure, achieving a good protection function on the battery cell in the accommodating space.

In some embodiments, the enclosing structure includes two middle compartment longitudinal beams, the two middle compartment longitudinal beams extend along the length direction, the two middle compartment longitudinal beams are connected to two sides of the middle compartment panel in a width direction of the middle compartment body, and the middle compartment longitudinal beam protrudes from the first surface and the second surface in the height direction. In this way, with the two middle compartment longitudinal beams extending along the length direction, crash forces received by the vehicle frame from different directions can be transmitted and dispersed through the two middle compartment longitudinal beams, achieving collision energy absorption effect. In addition, with the two middle compartment longitudinal beams being connected to the two sides of the middle compartment panel in the width direction, good fastening and protection functions on the middle compartment panel can be achieved via the two middle compartment longitudinal beams, making it easier to form the accommodating space and the mounting space.

In some embodiments, the middle compartment longitudinal beam includes two longitudinal plate bodies and a first force-transmitting rib, the two longitudinal plate bodies extend along the length direction, the two longitudinal plate bodies are spaced apart in the width direction, and the first force-transmitting rib is connected between the two longitudinal plate bodies. In this way, with the first force-transmitting rib being connected between the two longitudinal plate bodies, good fastening effect on the first force-transmitting rib can be achieved via the longitudinal plate bodies. In addition, the first force-transmitting rib can further assist in transmitting and dispersing crash forces received by the vehicle frame from different directions, achieving collision energy absorption effect.

In some embodiments, the first force-transmitting rib is provided in plurality, the plurality of first force-transmitting ribs are sequentially connected along the length direction, and each first force-transmitting rib is inclined relative to the longitudinal plate body. In this way, with the plurality of first force-transmitting ribs being sequentially connected along the length direction, an impact force received by the front compartment body can be transmitted to the rear compartment body through the first force-transmitting ribs, to ultimately implement transmission and dispersion of a crash force, improving collision energy absorption effect.

In some embodiments, the middle compartment body further includes a middle compartment cross beam, the middle compartment cross beam extends along a width direction of the middle compartment body, and the middle compartment cross beam is located on the first surface and is connected to the enclosing structure. In this way, with the middle compartment cross beam being located on the first surface and connected to the enclosing structure, good fastening and protection functions on the middle compartment panel can be achieved via the middle compartment cross beam. In addition, with the middle compartment cross beam extending along the width direction, crash forces received by the vehicle frame from different directions can be transmitted and dispersed through the middle compartment cross beam, achieving collision energy absorption effect.

In some embodiments, the middle compartment cross beam is provided in plurality, and the plurality of middle compartment cross beams are spaced apart along the length direction. In this way, with the plurality of middle compartment cross beams being provided, good fastening and protection functions on the middle compartment panel can be further achieved via the middle compartment cross beams. In addition, crash forces received by the vehicle frame from different directions are transmitted and dispersed, achieving collision energy absorption effect.

In some embodiments, the middle compartment cross beam includes two transverse plate bodies and a second force-transmitting rib, the two transverse plate bodies extend along the width direction, the two transverse plate bodies are spaced apart in the length direction, and the second force-transmitting rib is connected between the two transverse plate bodies. In this way, with the second force-transmitting rib being connected between the two transverse plate bodies, good fastening effect on the second force-transmitting rib can be achieved via the transverse plate bodies. In addition, the second force-transmitting rib can further assist in transmitting and dispersing crash forces received by the vehicle frame from different directions, achieving collision energy absorption effect.

In some embodiments, the second force-transmitting rib is provided in plurality, the plurality of second force-transmitting ribs are sequentially connected along the width direction, and each second force-transmitting rib is inclined relative to the transverse plate body. In this way, with the plurality of second force-transmitting ribs being sequentially connected along the width direction, an impact force received by the middle compartment body can be transmitted through the second force-transmitting ribs, to ultimately implement transmission and dispersion of a crash force, achieving collision energy absorption effect.

In some embodiments, the middle compartment longitudinal beam, the middle compartment cross beam, and the middle compartment panel are integrally die-cast formed. In this way, with the middle compartment longitudinal beam, the middle compartment cross beam, and the middle compartment panel being integrally die-cast formed, overall structural strength of the middle compartment body can be improved, and production efficiency for the middle compartment body can be improved. In addition, with the three being integrally die-cast formed, crash forces received by the vehicle frame from different directions can be further transmitted and dispersed, improving collision energy absorption effect.

In some embodiments, the front compartment body includes a front compartment connecting portion, the middle compartment body includes a middle compartment panel and two middle compartment longitudinal beams, the two middle compartment longitudinal beams extend along the length direction, the two middle compartment longitudinal beams are connected to two sides of the middle compartment panel in a width direction of the middle compartment body, and the front compartment connecting portion is connected to the middle compartment panel and the two middle compartment longitudinal beams. In this way, with the front compartment connecting portion being connected to the middle compartment panel and the two middle compartment longitudinal beams, stability of connection between the front compartment body and the middle compartment body can be improved, and a risk of a large accumulated manufacturing error due to many parts can be alleviated, improving manufacturing efficiency for a whole vehicle.

In some embodiments, the front compartment connecting portion includes a first connecting cross beam and a second connecting cross beam that are connected to each other, the first connecting cross beam and the second connecting cross beam extend along the width direction, the first connecting cross beam overlaps the middle compartment panel, and two side walls of the second connecting cross beam in the width direction abut against the two middle compartment longitudinal beams respectively. In this way, with the first connecting cross beam overlapping the middle compartment panel and the two side walls of the second connecting cross beam in the width direction abutting against the two middle compartment longitudinal beams respectively, stability of connection between the front compartment body and the middle compartment body can be improved, assembly difficulty can be reduced, and manufacturing efficiency for a whole vehicle can be improved.

In some embodiments, the front compartment body includes two front compartment main body portions spaced apart along the width direction, the two front compartment main body portions are connected to the front compartment connecting portion, and the front compartment main body portion is provided with a third force-transmitting rib. In this way, with the two front compartment main body portions being spaced apart along the width direction, mounting and fastening of a vehicle-mounted component such as a vehicle wheel can be facilitated. With the front compartment main body portion being provided with the third force-transmitting rib, structural strength of the front compartment main body portion can be enhanced via the third force-transmitting rib. In addition, an impact force received by the front compartment body can be transmitted to the middle compartment body and the rear compartment body, to ultimately implement transmission and dispersion of a crash force, improving collision energy absorption effect.

In some embodiments, the front compartment main body portion includes a front compartment longitudinal beam and a front shock tower, the front compartment longitudinal beam extends along the length direction, and the front shock tower protrudes from the front compartment longitudinal beam. In this way, with the front compartment longitudinal beam extending along the length direction, mounting and fastening of a vehicle-mounted component such as a vehicle wheel can be facilitated. With the front shock tower protruding from the front compartment longitudinal beam, mounting of a shock absorber can be facilitated via the front shock tower, vibration generated during vehicle travel can be alleviated, and smoothness of vehicle travel can be improved.

In some embodiments, the front compartment connecting portion and the two front compartment main body portions are integrally die-cast formed. In this way, with the three being integrally die-cast formed, overall structural strength of the front compartment body can be improved, and production efficiency for the front compartment body can be improved. In addition, with the three being integrally die-cast formed, crash forces received by the vehicle frame from different directions can be further transmitted and dispersed, improving collision energy absorption effect.

In some embodiments, the rear compartment body includes a rear compartment connecting portion, the middle compartment body includes a middle compartment panel and two middle compartment longitudinal beams, the two middle compartment longitudinal beams extend along the length direction, the two middle compartment longitudinal beams are connected to two sides of the middle compartment panel in a width direction of the middle compartment body, and the rear compartment connecting portion is connected to the middle compartment panel and the two middle compartment longitudinal beams. In this way, with the rear compartment connecting portion being connected to the middle compartment panel and the two middle compartment longitudinal beams, stability of connection between the rear compartment body and the middle compartment body can be improved, and a risk of a large accumulated manufacturing error due to many parts can be alleviated, improving manufacturing efficiency for a whole vehicle.

In some embodiments, the rear compartment connecting portion includes a third connecting cross beam and two connecting longitudinal beams, the two connecting longitudinal beams extend along the length direction, the third connecting cross beam is connected between the two connecting longitudinal beams, the third connecting cross beam overlaps the middle compartment panel, the two connecting longitudinal beams are located between the two middle compartment longitudinal beams, and one of the connecting longitudinal beams abuts against one of the middle compartment longitudinal beams. In this way, with the third connecting cross beam overlapping the middle compartment panel, the two connecting longitudinal beams being located between the two middle compartment longitudinal beams, and one of the connecting longitudinal beams abutting against one of the middle compartment longitudinal beams, stability of connection between the rear compartment body and the middle compartment body can be improved, assembly difficulty can be reduced, and manufacturing efficiency for a whole vehicle can be improved.

In some embodiments, the rear compartment body includes two rear compartment main body portions spaced apart along the width direction, the two rear compartment main body portions are connected to the rear compartment connecting portion, and the rear compartment main body portion is provided with a fourth force-transmitting rib. In this way, with the two rear compartment main body portions being spaced apart along the width direction, mounting and fastening of a vehicle-mounted component such as a vehicle wheel can be facilitated. With the rear compartment main body portion being provided with the fourth force-transmitting rib, structural strength of the rear compartment main body portion can be enhanced via the fourth force-transmitting rib, and an impact force received by the rear compartment body can be transmitted to the middle compartment body and the front compartment body, to ultimately implement transmission and dispersion of a crash force, improving collision energy absorption effect.

In some embodiments, the rear compartment main body portion includes a rear compartment longitudinal beam and a rear shock tower, the rear compartment longitudinal beam extends along the length direction, and the rear shock tower protrudes from the rear compartment longitudinal beam. In this way, with the rear compartment longitudinal beam extending along the length direction, mounting and fastening of a vehicle-mounted component such as a vehicle wheel can be facilitated. With the rear shock tower protruding from the rear compartment longitudinal beam, mounting of a shock absorber can be facilitated via the rear shock tower, vibration generated during vehicle travel can be alleviated, and smoothness of vehicle travel can be improved.

In some embodiments, the rear compartment connecting portion and the two rear compartment main body portions are integrally die-cast formed. In this way, with the three being integrally die-cast formed, overall structural strength of the rear compartment body can be improved, and production efficiency for the rear compartment body can be improved. In addition, with the three being integrally die-cast formed, crash forces received by the vehicle frame from different directions can be further transmitted and dispersed, improving collision energy absorption effect.

To resolve the above problems, this application provides a vehicle frame assembly. The vehicle frame assembly includes a battery component and the above vehicle frame, and the battery component is disposed in the middle compartment body of the vehicle frame.

To resolve the above problems, this application provides a vehicle. The vehicle includes the above vehicle frame assembly.

### BRIEF DESCRIPTION OF DRAWINGS

To more clearly describe the technical solutions in embodiments of this application or the conventional technology, the accompanying drawings to be used in embodiments are briefly introduced below. It is clear that the accompanying drawings described below are only some embodiments of this application. For persons of ordinary skill in the art, other drawings can also be obtained based on these drawings without creative effort.
FIG. 1 is a schematic diagram of a structure of a vehicle according to one or more embodiments;
FIG. 2 is a schematic diagram of a structure of a vehicle frame assembly according to one or more embodiments;
FIG. 3 is a schematic diagram of a structure of a vehicle frame according to one or more embodiments;
FIG. 4 is a schematic diagram of an exploded structure of the vehicle frame shown in FIG. 3;
FIG. 5 is a schematic diagram of a cross-sectional structure of the vehicle frame shown in FIG. 3 along an A-A direction;
FIG. 6 is a schematic diagram of a top-view structure of the vehicle frame shown in FIG. 3; and
FIG. 7 is a schematic diagram of a structure within a dashed box in the vehicle frame shown in FIG. 6.

Reference signs: vehicle 1; vehicle frame assembly 2; vehicle-mounted component 3; vehicle frame 10; middle compartment body 100; middle compartment panel 110; first surface 111; second surface 112; enclosing structure 120; middle compartment longitudinal beam 121; longitudinal plate body 1211; first force-transmitting rib 1212; middle compartment cross beam 130; transverse plate body 131; second force-transmitting rib 132; front compartment body 200; front compartment connecting portion 210; first connecting cross beam 211; second connecting cross beam 212; front compartment main body portion 220; front compartment longitudinal beam 221; front shock tower 222; third force-transmitting rib 230; rear compartment body 300; rear compartment connecting portion 310; third connecting cross beam 311; connecting longitudinal beam 312; rear compartment main body portion 320; rear compartment longitudinal beam 321; rear shock tower 322; fourth force-transmitting rib 330; accommodating space 400; mounting space 500; length direction X; width direction Y; height direction Z; battery cell 20; and cover plate 30.

### DESCRIPTION OF EMBODIMENTS

Embodiments of the technical solutions of this application are described in detail below with reference to the accompanying drawings. The following embodiments are only used to more clearly describe the technical solutions of this application and thus are merely used as examples, rather than limiting the protection scope of this application.

Unless otherwise defined, all technical and scientific terms used herein have same meaning as commonly understood by persons of ordinary skill in the art to which this application belongs. The terms used herein are for the purpose of describing specific embodiments only, but are not intended to limit this application. The terms "including", "comprising", and any variations thereof in the specification, claims, and above description of the accompanying drawings of this application are intended to cover non-exclusive inclusions.

In the description of embodiments of this application, technical terms such as "first" and "second" are used only to distinguish between different objects and cannot be understood as indicating or implying relative importance or implicitly indicating a quantity, specific order, or primary-secondary relationship of the indicated technical features. In the description of embodiments of this application, a meaning of "a plurality" is two or more, unless otherwise clearly and specifically limited.

As used herein, an "embodiment" means that a particular feature, structure, or characteristic described in connection with this embodiment may be included in at least one embodiment of this application. The phrase appearing in various places in the specification does not necessarily refer to the same embodiment, nor is it an independent or alternative embodiment that is mutually exclusive with other embodiments. Persons of ordinary skill in the art explicitly and implicitly understand that embodiments described herein can be combined with other embodiments.

In the description of embodiments of this application, the term "and/or" is merely an association describing associated objects, indicating that three relationships may exist, for example, A and/or B can indicate: A exists alone, A and B exist simultaneously, B exists alone. In addition, the character "/" in this text generally indicates that the associated objects before and after are in an "or" relationship.

In the description of embodiments of this application, the technical term "a plurality" refers to two or more (including two), similarly, "a plurality of groups" refers to two or more groups (including two groups), and " a plurality of pieces" refers to two or more pieces (including two pieces).

In the description of embodiments of this application, an orientation or positional relationship indicated by technical terms such as "center", "longitudinal", "transverse", "length", "width", "thickness", "upper", "lower", "front", "rear", "left", "right", "vertical", "horizontal", "top", "bottom", "inner", "outer", "clockwise", "counterclockwise", "axial", "radial", "circumferential" is based on the orientation or positional relationship shown in the accompanying drawings, and is only for facilitating the description of embodiments of this application and simplifying the description, rather than indicating or implying that the referred device or element needs to have a specific orientation, be constructed and operated in a specific orientation, and therefore cannot be understood as limiting embodiments of this application.

In the description of embodiments of this application, unless otherwise clearly specified and limited, technical terms such as "mounted", "connected", "coupled", and "fastened" should be understood in a broad sense, for example, fixedly connected, or detachably connected, or integrated; or mechanically connected or electrically connected; or may be directly connected or indirectly connected through an intermediary; or may be internal communication of two elements or an interaction relationship between two elements. For persons of ordinary skill in the art, the specific meanings of the above terms in embodiments of this application may be understood according to specific circumstances.

Vehicles are common means of transportation, and material usage of vehicles directly relates to costs and weights of the vehicles. The weight of the vehicle is directly related to energy consumption of the vehicle; a greater weight of the vehicle indicates more energy to be consumed during travel. Especially for a new energy vehicle, because the new energy vehicle often needs to be equipped with a large number of batteries, and the batteries are generally heavy and occupy a large space on a chassis, it is particularly important to reduce a weight of the vehicle and reduce a space occupied by the chassis.

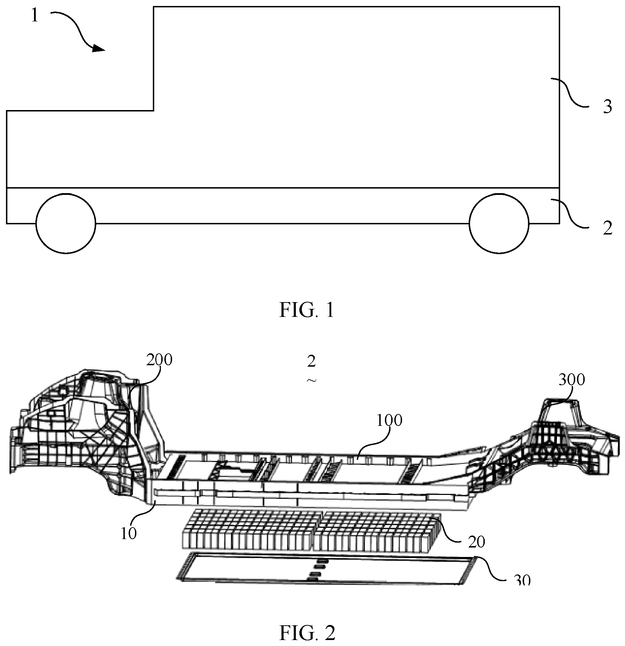

Based on this, this application provides a vehicle. Refer to FIG. 1. FIG. 1 is a schematic diagram of a structure of a vehicle according to one or more embodiments.

The vehicle 1 may be an internal combustion engine vehicle, a natural gas vehicle, or a new energy vehicle. The new energy vehicle may be a pure electric vehicle, a hybrid electric vehicle, an extended-range vehicle, or the like. The vehicle 1 may include a vehicle frame assembly 2 and a vehicle-mounted component 3. The vehicle-mounted component 3 may be used as an upper body of the vehicle 1, the vehicle frame assembly 2 may be used as a lower body of the vehicle 1, and the vehicle-mounted component 3 is mounted on the vehicle frame assembly 2 to form the vehicle 1. Specifically, the vehicle frame assembly 2 may include, but is not limited to, a chassis, and the vehicle-mounted component 3 may include, but is not limited to, a vehicle body. The vehicle body is mounted on the chassis and supported by the chassis.

This application provides a vehicle frame assembly 2. Refer to FIG. 2. FIG. 2 is a schematic diagram of a structure of a vehicle frame assembly according to one or more embodiments.

The vehicle frame assembly 2 includes a battery component and a vehicle frame 10, and the battery component is disposed in a middle compartment body 100 of the vehicle frame 10. The vehicle frame 10 may include a front compartment body 200, the middle compartment body 100, and a rear compartment body 300. Specifically, the vehicle frame 10 is mounted on the vehicle 1, and the vehicle frame 10 may be sequentially divided into three parts along a forward direction of the vehicle 1: A front part of the vehicle frame 10 is the front compartment body 200, a middle part of the vehicle frame 10 is the middle compartment body 100, and a rear part of the vehicle frame 10 is the rear compartment body 300. The front compartment body 200 may be connected to a front vehicle axle or the like, the rear compartment body 300 may be connected to a rear vehicle axle or the like, and an interior trim structure such as a seat of the vehicle 1 may be mounted on the middle compartment body 100.

The battery component may include one or more battery cells 20. When the battery cell 20 is provided in plurality, the plurality of battery cells 20 together form a battery module and are loaded into the middle compartment body 100. The plurality of battery cells 20 may be connected in series, in parallel, or in a hybrid manner, where the connection in the hybrid manner means that some of the plurality of battery cells 20 are connected in series and some of the plurality of battery cells 20 are connected in parallel. The plurality of battery cells 20 may be directly connected in series, in parallel, or in a hybrid manner, and then a whole formed by the plurality of battery cells 20 is loaded into the middle compartment body 100.

A method for manufacturing the battery cell 20 includes stacking and winding, that is, the battery cell 20 is classified into a stacked battery and a wound battery. The stacked battery has uniform current collection effect, low internal resistance, and high specific power, but requires extremely high mold accuracy and high equipment investment to improve accuracy. In addition, a process is complex and production efficiency is low. The wound battery is simple to manufacture, is high in production efficiency, and is cost-effective, and a plate preparation and assembly process imposes a general requirement for equipment accuracy. In terms of performance, the wound battery has excellent high- and low- temperature performance, very fast charging speed, ultra-long life, stable high output voltage, sturdy structure, and strong shock resistance.

When the battery component is mounted in the middle compartment body 100, the battery component can be sealed and protected through cooperation of a cover plate 30 with the middle compartment body 100. In this embodiment, the vehicle frame assembly 2 is applicable to a CTC (Cell to Chassis) process, that is, directly integrates the battery component into the vehicle frame 10. The CTC process can further deepen integration of the battery system and the chassis of the vehicle 1, reduce a quantity of parts and components, increase space utilization of the battery component, increase a battery capacity per unit space, and increase a range. In addition, the CTC process can integrate a battery with the chassis, enhancing structural strength of the chassis and improving the safety of the vehicle.

A structure of the vehicle frame 10 is one of important components of an automobile. In related technical solutions, a chassis structure of the vehicle frame 10 is often formed by performing operations such as welding on a large number of sheet metal parts and components. However, there is a long process for this forming method, leading to an extended manufacturing cycle for a whole vehicle. In addition, an accumulated manufacturing error due to a large number of parts and components is large, making it difficult to adapt to the rapid iteration pace of vehicles 1 in terms of manufacturing efficiency and quality.

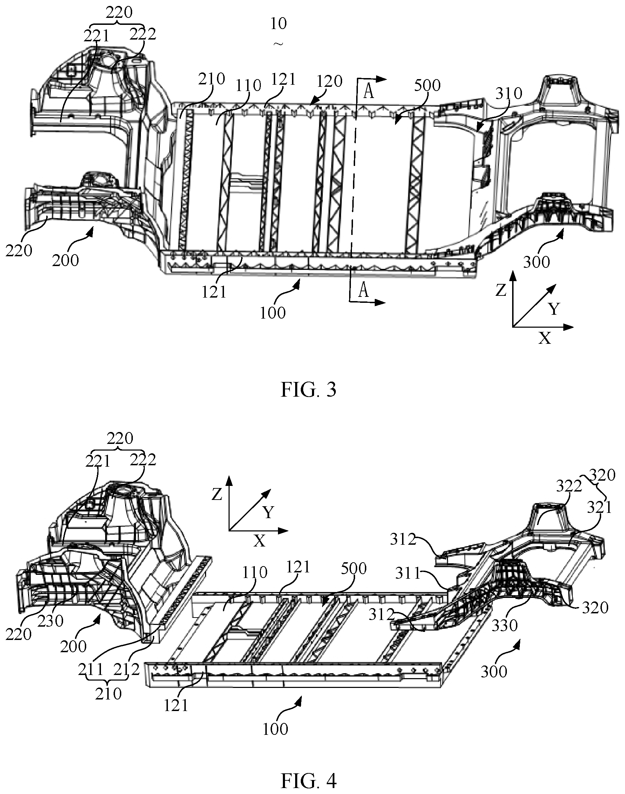

To resolve the technical problems existing in the related art, this application provides a vehicle frame. Refer to FIG. 3 and FIG. 4. FIG. 3 is a schematic diagram of a structure of a vehicle frame according to one or more embodiments. FIG. 4 is a schematic diagram of an exploded structure of the vehicle frame shown in FIG. 3.

The vehicle frame 10 includes a front compartment body 200, a rear compartment body 300, and a middle compartment body 100. The front compartment body 200 is integrally formed. The rear compartment body 300 is integrally formed. The middle compartment body 100 is integrally formed; and in a length direction X of the middle compartment body 100, the front compartment body 200 and the rear compartment body 300 are located on two sides of the middle compartment body 100, and the middle compartment body 100 is connected to the front compartment body 200 and the rear compartment body 300. When the vehicle frame 10 is mounted on a vehicle, a forward direction of the vehicle is the length direction X of the middle compartment body 100.

The front compartment body 200, the rear compartment body 300, and the middle compartment body 100 may be separately integrally die-cast formed, to replace a solution of forming the front compartment body 200, the rear compartment body 300, and the middle compartment body 100 separately by welding a large number of sheet metal parts and components. This can alleviate a risk of a large accumulated manufacturing error due to a large number of parts and components. For example, a beam structure, a shock tower, a force-transmitting rib, and the like of a front compartment may be integrally formed into the front compartment body 200 through integral die-casting, a beam structure, a shock tower, a force-transmitting rib, and the like of a rear compartment may be integrally formed into the rear compartment body 300 through integral die-casting, and a beam structure, a force-transmitting rib, and the like of a middle compartment may be integrally formed into the middle compartment body 100 through integral die-casting.

The front compartment body 200 may be, for example, fixedly connected or detachably connected to the middle compartment body 100. For example, the front compartment body 200 may achieve detachable connection to the middle compartment body 100 through threaded connection, or the front compartment body 200 may achieve fixed connection to the middle compartment body 100 through welding or in another manner. Similarly, the rear compartment body 300 may be, for example, fixedly connected or detachably connected to the middle compartment body 100. For example, the rear compartment body 300 may achieve detachable connection to the middle compartment body 100 through threaded connection, or the rear compartment body 300 may achieve fixed connection to the middle compartment body 100 through welding or in another manner.

In the above embodiments, with each of the front compartment body 200, the middle compartment body 100, and the rear compartment body 300 being integrally formed, manufacturing efficiency for the front compartment body 200, the middle compartment body 100, and the rear compartment body 300 can be improved by means of the integrated configuration manner, and a quantity of parts and components of the vehicle frame 10 is reduced. This reduces assembly processes such as welding and riveting during a manufacturing process, improves production efficiency, and can further improve structural strength of the front compartment body 200, the middle compartment body 100, and the rear compartment body 300. The middle compartment body 100 is connected to the front compartment body 200 and the rear compartment body 300 to form the vehicle frame 10, so that a production process chain can be shortened, flexible layout in a production workshop is facilitated, and a risk of a manufacturing error may be further alleviated in comparison with a solution of forming by assembling many parts and components. In this way, manufacturing efficiency for a whole vehicle may be improved.

Specifically, with each of the front compartment body 200, the middle compartment body 100, and the rear compartment body 300 being integrally formed, and the three being connected to form the vehicle frame 10, an integrated design strategy may be applied to the extreme, to maximize use of structural body strength, reduce overlapping redundancy, and significantly reduce a weight compared with a sheet metal vehicle frame 10 of the same structure. In addition, integrally die-casting and combining the front compartment body 200, the middle compartment body 100, and the rear compartment body 300 can significantly reduce an adhesion region of a structural adhesive and a sealant, and reduce sealing problems such as water ingress and leakage caused by an accumulated error and poor assembly accuracy after battery assembly.

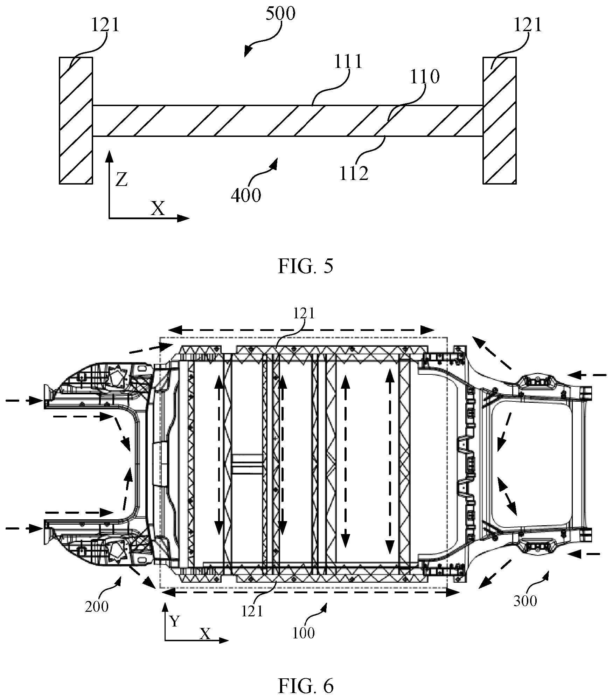

Refer to FIG. 5. FIG. 5 is a schematic diagram of a cross-sectional structure of the vehicle frame shown in FIG. 3 along an A-A direction.

An accommodating space 400 and a mounting space 500 are formed in the middle compartment body 100, an opening of the mounting space 500 is provided back away from an opening of the accommodating space 400 in a height direction Z of the middle compartment body 100, the accommodating space 400 is used for accommodating a battery cell, and the mounting space 500 is used for mounting a vehicle-mounted component. When the vehicle frame 10 is mounted on the vehicle, a direction of the vehicle perpendicular to the ground may be understood as the height direction Z. The mounting space 500 and the accommodating space 400 may be separated by a panel of the middle compartment body 100, and the opening of the mounting space 500 is provided back away from the opening of the accommodating space 400. Specifically, the opening of the accommodating space 400 may face the ground, and the opening of the mounting space 500 may be provided back away from the ground, to facilitate mounting of the battery cell into the accommodating space 400 from the opening of the accommodating space 400, and facilitate mounting of the vehicle-mounted component into the mounting space 500 from the opening of the mounting space 500. The vehicle-mounted component may include, but is not limited to, an interior trim structure such as a seat. The battery cell may be provided in plurality, and the plurality of battery cells together form a battery module and are loaded into the middle compartment body 100, so that the vehicle frame 10 is applicable to a CTC process. Compared with that in a traditional battery pack process, the battery cell may be integrated onto the vehicle frame 10, to further reduce the quantity of parts and components, save a space, improve structural efficiency, significantly reduce a vehicle weight, increase battery endurance mileage, and the like.

Further, the middle compartment body 100 includes a middle compartment panel 110 and an enclosing structure 120, the middle compartment panel 110 is provided with a first surface 111 and a second surface 112 that are provided back away from each other in the height direction Z, the enclosing structure 120 protrudes from the first surface 111 in the height direction Z to form the mounting space 500, and the enclosing structure 120 protrudes from the second surface 112 in the height direction Z to form the accommodating space 400. The middle compartment panel 110 is plate-shaped, and a shape of the middle compartment panel 110 may be set based on actual conditions. The accommodating space 400 and the mounting space 500 may be separated by the middle compartment panel 110. The enclosing structure 120 is disposed around a circumferential direction of the middle compartment panel 110 and connected to a side surface of the middle compartment panel 110. A cavity enclosed by the first surface 111 and a side wall of the enclosing structure 120 protruding from the first surface 111 may be used as the mounting space 500, and a cavity enclosed by the second surface 112 and a side wall of the enclosing structure 120 protruding from the second surface 112 may be used as the accommodating space 400, to simplify a forming method of the accommodating space 400 and the mounting space 500, and facilitate mounting and cooperation of the vehicle-mounted component and the vehicle frame 10. When the battery cell is mounted in the accommodating space 400, a cover plate may cover the opening of the accommodating space 400 and cooperate with the enclosing structure 120 to seal the accommodating space 400, achieving a good protection function on the battery cell via the cover plate and the middle compartment body 100.

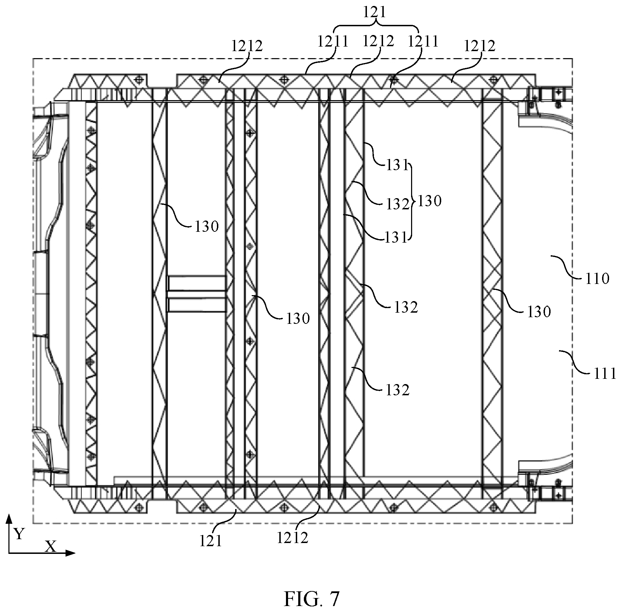

Refer to FIG. 6 and FIG. 7. FIG. 6 is a schematic diagram of a top-view structure of the vehicle frame shown in FIG. 3. FIG. 7 is a schematic diagram of a structure within a dashed box in the vehicle frame shown in FIG. 6.

The enclosing structure 120 includes two middle compartment longitudinal beams 121, the two middle compartment longitudinal beams 121 extend along the length direction X, the two middle compartment longitudinal beams 121 are connected to two sides of the middle compartment panel 110 in a width direction Y of the middle compartment body 100, and the middle compartment longitudinal beam 121 protrudes from the first surface 111 and the second surface 112 in the height direction Z. The width direction Y of the middle compartment body 100, the length direction X of the middle compartment body 100, and the height direction Z of the middle compartment body 100 are perpendicular to each other. With the middle compartment longitudinal beams 121 being connected to the two sides of the middle compartment panel 110 in the width direction Y of the middle compartment body 100, good fastening and protection functions on the middle compartment panel 110 can be achieved via the two middle compartment longitudinal beams 121, making it easier to form the accommodating space 400 and the mounting space 500. A quantity of middle compartment longitudinal beams 121 may be set based on actual conditions. For example, there may be three middle compartment longitudinal beams 121, two of the middle compartment longitudinal beams 121 are adjacently disposed in the width direction Y and connected to one side of the middle compartment panel 110, and a remaining middle compartment longitudinal beam 121 is spaced apart from the two of the middle compartment longitudinal beams 121 in the width direction Y and connected to the other side of the middle compartment panel 110.

The middle compartment body 100 can be connected to the front compartment body 200 and the rear compartment body 300 via the middle compartment panel 110 and the middle compartment longitudinal beams 121, and the middle compartment longitudinal beams 121 extend along the length direction X, so that impact forces received by the vehicle frame 10 may be dispersed and transmitted through the middle compartment longitudinal beams 121. As shown in FIG. 6, dashed arrows may represent impact forces received by the vehicle frame 10. When the vehicle frame 10 receives an impact force from the front compartment body 200, the impact force is guided to the middle compartment body 100 by the front compartment body 200 and guided to the rear compartment body 300 through the middle compartment longitudinal beams 121. When the vehicle frame 10 receives an impact force from the rear compartment body 300, the impact force is guided to the middle compartment body 100 by the rear compartment body 300 and guided to the front compartment body 200 through the middle compartment longitudinal beams 121. In this way, with the two middle compartment longitudinal beams 121 extending along the length direction X, crash forces received by the vehicle frame 10 from different directions can be transmitted and dispersed through the two middle compartment longitudinal beams 121, achieving collision energy absorption effect.

In some embodiments, the middle compartment longitudinal beam 121 includes two longitudinal plate bodies 1211 and a first force-transmitting rib 1212, the two longitudinal plate bodies 1211 extend along the length direction X, the two longitudinal plate bodies 1211 are spaced apart in the width direction Y, and the first force-transmitting rib 1212 is connected between the two longitudinal plate bodies 1211. One of the two longitudinal plate bodies 1211 may be connected to the middle compartment panel 110, and the two longitudinal beam plate bodies may be connected to each other via the first force-transmitting rib 1212. The first force-transmitting rib 1212 can be used to guide an impact force received by the middle compartment longitudinal beam 121. In this way, with the first force-transmitting rib 1212 being connected between the two longitudinal plate bodies 1211, a good fastening function on the first force-transmitting rib 1212 can be achieved via the longitudinal plate bodies 1211. In addition, the first force-transmitting rib 1212 can further assist in transmitting and dispersing crash forces received by the vehicle frame 10 from different directions, achieving collision energy absorption effect.

Further, the first force-transmitting rib 1212 is provided in plurality, the plurality of first force-transmitting ribs 1212 are sequentially connected along the length direction X, and each first force-transmitting rib 1212 is inclined relative to the longitudinal plate body 1211. Each first force-transmitting rib 1212 may be connected to two longitudinal plate bodies 1211, and two ends of the first force-transmitting rib 1212 at the middle position may be respectively connected to two first force-transmitting ribs 1212 adjacent to the first force-transmitting rib 1212 at the middle position. For example, a first end of the 2^{nd} first force-transmitting rib 1212 is connected to both a second end of the 1^{st} first force-transmitting rib 1212 and one longitudinal plate body 1211, and a second end of the 2^{nd} first force-transmitting rib 1212 is connected to both a first end of the 3^{rd} first force-transmitting rib 1212 and the other longitudinal plate body 1211; a second end of the 3^{rd} first force-transmitting rib 1212 is connected to both a first end of the 4^{th} first force-transmitting rib 1212 and one longitudinal plate body 1211, so that two adjacent first force-transmitting ribs 1212 and a longitudinal plate body 1211 define a triangular shape; by analogy, a plurality of triangular shapes may be enclosed through cooperation of the plurality of first force-transmitting ribs 1212 and two longitudinal plate bodies 1211. In this way, with the plurality of first force-transmitting ribs 1212 being sequentially connected along the length direction X, an impact force received by the front compartment body 200 can be transmitted to the rear compartment body 300 through the first force-transmitting ribs 1212, to ultimately achieve transmission and dispersion of a crash force, improving collision energy absorption effect. In some embodiments, an included angle at a joint between two adjacent first force-transmitting ribs 1212 is an acute angle, so that triangles enclosed by the two adjacent first force-transmitting ribs 1212 and two longitudinal plate bodies 1211 through cooperation are acute triangles. This can improve force transmission effect of the first force-transmitting ribs 1212 and structural stability of the first force-transmitting ribs 1212. Alternatively, triangles enclosed by the two adjacent first force-transmitting ribs 1212 and two longitudinal plate bodies 1211 through cooperation are obtuse triangles.

In some embodiments, the middle compartment body 100 further includes a middle compartment cross beam 130, the middle compartment cross beam 130 extends along a width direction Y of the middle compartment body 100, and the middle compartment cross beam 130 is located on the first surface 111 and is connected to the enclosing structure 120. The middle compartment cross beam 130 may be fastened to the first surface 111, and two ends of the middle compartment cross beam 130 in the width direction Y may be connected to the enclosing structure 120. Specifically, when the enclosing structure 120 includes two middle compartment longitudinal beams 121, two ends of the middle compartment cross beam 130 may be respectively connected to two middle compartment longitudinal beams 121. This can achieve good fastening and protection functions on the middle compartment panel 110 via the middle compartment cross beam 130.

The middle compartment body 100 can be connected to the front compartment body 200 and the rear compartment body 300 via the middle compartment panel 110 and the enclosing structure 120, and may disperse and transmit impact forces received by the vehicle frame 10 through the enclosing structure 120 and the middle compartment cross beam 130. As shown in FIG. 6, dashed arrows may represent impact forces received by the vehicle frame 10. When the vehicle frame 10 receives an impact force from the front compartment body 200, the impact force is guided to the middle compartment body 100 by the front compartment body 200 and guided to the rear compartment body 300 and the middle compartment cross beam 130 through the enclosing structure 120. When the vehicle frame 10 receives an impact force from the rear compartment body 300, the impact force is guided to the middle compartment body 100 by the rear compartment body 300 and guided to the front compartment body 200 and the middle compartment cross beam 130 through the enclosing structure 120. This can transmit and disperse, through the middle compartment cross beam 130, crash forces received by the vehicle frame 10 from different directions, achieving collision energy absorption effect.

Further, the middle compartment cross beams 130 is provided in plurality, and the plurality of middle compartment cross beams 130 are spaced apart along the length direction X. A quantity of middle compartment cross beams 130 may be set based on actual conditions, and the plurality of middle compartment cross beams 130 may be arranged at equal spacings, arranged based on an actual predicted force-receiving status, or the like. In this way, with the plurality of middle compartment cross beams 130 being disposed, good fastening and protection functions on the middle compartment panel 110 can be further provided via the middle compartment cross beams 130, and crash forces received by the vehicle frame 10 from different directions can be transmitted and dispersed, achieving collision energy absorption effect.

Optionally, the middle compartment cross beam 130 includes two transverse plate bodies 131 and a second force-transmitting rib 132, the two transverse plate bodies 131 extend along the width direction Y, the two transverse plate bodies 131 are spaced apart in the length direction X, and the second force-transmitting rib 132 is connected between the two transverse plate bodies 131. Each of the two transverse plate bodies 131 may be connected to the middle compartment panel 110, the second force-transmitting rib 132 may be connected to both the two transverse plate bodies 131 and the middle compartment panel 110, or the second force-transmitting rib 132 may be connected to the two transverse plate bodies 131 and spaced apart from the middle compartment panel 110. In this way, with the second force-transmitting rib 132 being connected between the two transverse plate bodies 131, a good fastening function on the second force-transmitting rib 132 can be achieved via the transverse plate bodies 131. In addition, the second force-transmitting rib 132 can further assist in transmitting and dispersing crash forces received by the vehicle frame 10 from different directions, achieving collision energy absorption effect.

Further, the second force-transmitting ribs 132 is provided in plurality, the plurality of second force-transmitting ribs 132 are sequentially connected along the width direction Y, and each second force-transmitting rib 132 is inclined relative to the transverse plate body 131. Each second force-transmitting rib 132 may be connected to the two transverse plate bodies 131, and two ends of the second force-transmitting rib 132 at the middle position may be respectively connected to two second force-transmitting ribs 132 adjacent to the second force-transmitting rib 132 at the middle position. For example, a first end of the 2^{nd} second force-transmitting rib 132 is connected to both a second end of the 1^{st} second force-transmitting rib 132 and one transverse plate body 131, and a second end of the 2^{nd} second force-transmitting rib 132 is connected to both a first end of the 3^{rd} second force-transmitting rib 132 and the other transverse plate body 131; a second end of the 3^{rd} second force-transmitting rib 132 is connected to both a first end of the 4^{th} second force-transmitting rib 132 and one transverse plate body 131, so that two adjacent second force-transmitting ribs 132 and a transverse plate body 131 define a triangular shape; by analogy, a plurality of triangular shapes may be enclosed through cooperation of the plurality of second force-transmitting ribs 132 and two transverse plate bodies 131. In this way, with the plurality of second force-transmitting ribs 132 being sequentially connected along the length direction X, an impact force received by the front compartment body 200 can be transmitted to the rear compartment body 300 through the second force-transmitting ribs 132, to ultimately achieve transmission and dispersion of a crash force, improving collision energy absorption effect. In some embodiments, an included angle at a joint between two adjacent second force-transmitting ribs 132 is an acute angle, so that triangles enclosed by the two adjacent second force-transmitting ribs 132 and two transverse plate bodies 131 through cooperation are acute triangles. This can improve force transmission effect of the second force-transmitting rib 132 and structural stability of the second force-transmitting ribs 132. Alternatively, triangles enclosed by the two adjacent second force-transmitting ribs 132 and two transverse plate bodies 131 through cooperation are obtuse triangles.

Further, the middle compartment longitudinal beam 121, the middle compartment cross beam 130, and the middle compartment panel 110 are integrally die-cast formed. Specifically, the middle compartment panel 110, the enclosing structure 120, the two longitudinal plate bodies 1211 and the first force-transmitting rib 1212 of the middle compartment longitudinal beam 121, and the two transverse plate bodies 131 and the second force-transmitting rib 132 of the middle compartment cross beam 130 are all integrally die-cast formed. This can improve overall structural strength of the middle compartment body 100 and production efficiency for the middle compartment body 100. In addition, crash forces received by the vehicle frame 10 from different directions can be further transmitted and dispersed through integral die-cast forming, improving collision energy absorption effect.

In some embodiments, the front compartment body 200 includes a front compartment connecting portion 210, the middle compartment body 100 includes a middle compartment panel 110 and two middle compartment longitudinal beams 121, the two middle compartment longitudinal beams 121 extend along the length direction X, the two middle compartment longitudinal beams 121 are connected to two sides of the middle compartment panel 110 in a width direction Y of the middle compartment body 100, and the front compartment connecting portion 210 is connected to the middle compartment panel 110 and the two middle compartment longitudinal beams 121. This can improve stability of connection between the front compartment body 200 and the middle compartment body 100, and alleviate a risk of a large accumulated manufacturing error due to many parts, improving manufacturing efficiency for a whole vehicle. The front compartment connecting portion 210 may be located between the two middle compartment longitudinal beams 121 in the width direction Y; or the front compartment connecting portion 210 may be located outside the two middle compartment longitudinal beams 121 in the width direction Y; or part of a structure of the front compartment connecting portion 210 is located between the two middle compartment longitudinal beams 121 in the width direction Y, and another part of the structure of the front compartment connecting portion 210 is located outside the two middle compartment longitudinal beams 121 in the width direction Y. The front compartment connecting portion 210 may be fixedly connected or detachably connected to the middle compartment panel 110 and the middle compartment longitudinal beams 121. For example, the front compartment connecting portion 210 may be fastened to the middle compartment panel 110 and the middle compartment longitudinal beams 121 through welding, or threaded holes may be provided at corresponding positions, to connect the front compartment connecting portion 210 to the middle compartment panel 110 and the middle compartment longitudinal beams 121 through threaded fasteners.

Further, the front compartment connecting portion 210 includes a first connecting cross beam 211 and a second connecting cross beam 212 that are connected to each other, the first connecting cross beam 211 and the second connecting cross beam 212 extend along the width direction Y, the first connecting cross beam 211 overlaps the middle compartment panel 110, and two side walls of the second connecting cross beam 212 in the width direction Y abut against the two middle compartment longitudinal beams 121 respectively. The first connecting cross beam 211 and the second connecting cross beam 212 may be bent and connected to each other. For example, the first connecting cross beam 211 and the second connecting cross beam 212 form an L-shape after being connected. The middle compartment panel 110 may have an overlapping recess matching the first connecting cross beam 211, to facilitate overlapping of the first connecting cross beam 211 onto the middle compartment panel 110 and achieve a positioning function on the front compartment connecting portion 210 via the first connecting cross beam 211 and the middle compartment panel 110. Two side walls of each of the first connecting cross beam 211 and the second connecting cross beam 212 in the width direction Y may abut against between the two middle compartment longitudinal beams 121, and each of the first connecting cross beam 211 and/or the second connecting cross beam 212 may be provided with threaded holes, and corresponding threaded holes are provided on the middle compartment longitudinal beams 121, so as to facilitate detachable connection of the front compartment body 200 and the middle compartment body 100. This improves stability of connection between the front compartment body 200 and the middle compartment body 100, reduces assembly difficulty, and improves manufacturing efficiency for a whole vehicle.

Optionally, the front compartment body 200 includes two front compartment main body portions 220 spaced apart along the width direction Y, the two front compartment main body portions 220 are connected to the front compartment connecting portion 210, and the front compartment main body portion 220 is provided with a third force-transmitting rib 230. The front compartment main body portion 220 may be configured to mount a vehicle-mounted component such as a shock absorber or a vehicle axle of a vehicle. A shape and structure of the front compartment main body portion 220 may be set based on actual conditions, for example, the bottom of the front compartment main body portion 220 may be recessed upward to accommodate a structure of a vehicle such as a vehicle wheel; or the top of the front compartment main body portion 220 may be provided with through holes to accommodate a shock absorber of a vehicle, or the like. The third force-transmitting rib 230 may be mainly distributed on an outer surface of the front compartment main body portion 220, a shape and quantity of third force-transmitting ribs 230 may be set based on actual conditions, and the third force-transmitting rib 230 may be randomly arranged. When the third force-transmitting rib 230 is provided in plurality, the plurality of third force-transmitting ribs 230 may be spliced to each other, so that the third force-transmitting ribs 230 can extend to a position close to the middle compartment body 100 from an end that is of the front compartment body 200 and that is away from the middle compartment body 100. This can enhance structural strength of the front compartment main body portion 220 via the third force-transmitting ribs 230, and transmit an impact force received by the front compartment body 200 to the middle compartment body 100 and the rear compartment body 300, to ultimately achieve transmission and dispersion of a crash force, improving collision energy absorption effect.

Further, the front compartment main body portion 220 includes a front compartment longitudinal beam 221 and a front shock tower 222, the front compartment longitudinal beam 221 extends along the length direction X, and the front shock tower 222 protrudes from the front compartment longitudinal beam 221. The front shock tower 222 may be located on an upper side of the front compartment longitudinal beam 221, a lower side of the front compartment longitudinal beam 221 may be configured to mount a vehicle-mounted component such as a vehicle axle, and the front shock tower 222 may be configured to mount a shock absorber of a vehicle. Specifically, the front shock tower 222 may be provided with a shock absorber mounting hole, and an opening of the mounting hole faces a direction back away from the front compartment longitudinal beam 221, facilitating mounting of the shock absorber in the mounting hole. This helps alleviate, via the shock absorber, vibration generated during vehicle travel, and improves smoothness of vehicle travel.

Further, the front compartment connecting portion 210 and the two front compartment main body portions 220 are integrally die-cast formed. Specifically, the first connecting cross beam 211 and the second connecting cross beam 212 of the front compartment connecting portion 210, the front compartment longitudinal beam 221 and the front shock tower 222 of the front compartment main body portion 220, and the third force-transmitting rib 230 are all integrally die-cast formed. This can improve overall structural strength of the front compartment body 200 and production efficiency for the front compartment body 200. In addition, crash forces received by the vehicle frame 10 from different directions can be further transmitted and dispersed through integral die-cast forming, improving collision energy absorption effect.

In some embodiments, the rear compartment body 300 includes a rear compartment connecting portion 310, the middle compartment body 100 includes a middle compartment panel 110 and two middle compartment longitudinal beams 121, the two middle compartment longitudinal beams 121 extend along the length direction X, the two middle compartment longitudinal beams 121 are connected to two sides of the middle compartment panel 110 in a width direction Y of the middle compartment body 100, and the rear compartment connecting portion 310 is connected to the middle compartment panel 110 and the two middle compartment longitudinal beams 121. This can improve stability of connection between the rear compartment body 300 and the middle compartment body 100, and alleviate a risk of a large accumulated manufacturing error due to many parts, improving manufacturing efficiency for a whole vehicle. The rear compartment connecting portion 310 may be located between the two middle compartment longitudinal beams 121 in the width direction Y; or the rear compartment connecting portion 310 may be located outside the two middle compartment longitudinal beams 121 in the width direction Y; or part of a structure of the rear compartment connecting portion 310 is located between the two middle compartment longitudinal beams 121 in the width direction Y, and another part of the structure of the rear compartment connecting portion 310 is located outside the two middle compartment longitudinal beams 121 in the width direction Y. The rear compartment connecting portion 310 may be fixedly connected or detachably connected to the middle compartment panel 110 and the middle compartment longitudinal beams 121. For example, the rear compartment connecting portion 310 may be fastened to the middle compartment panel 110 and the middle compartment longitudinal beams 121 through welding, or threaded holes may be provided at corresponding positions, to connect the rear compartment connecting portion 310 to the middle compartment panel 110 and the middle compartment longitudinal beams 121 through threaded fasteners.

Further, the rear compartment connecting portion 310 includes a third connecting cross beam 311 and two connecting longitudinal beams 312, the two connecting longitudinal beams 312 extend along the length direction X, the third connecting cross beam 311 is connected between the two connecting longitudinal beams 312, the third connecting cross beam 311 overlaps the middle compartment panel 110, the two connecting longitudinal beams 312 are located between the two middle compartment longitudinal beams 121, and one of the connecting longitudinal beam 312 abuts against one of the middle compartment longitudinal beams 121. The third connecting cross beam 311 and the two connecting longitudinal beams 312 may be all connected to the middle compartment panel 110, and the third connecting cross beam 311 and the middle compartment panel 110 may be fixedly connected through welding or may achieve detachable connection via bolts or the like. The two connecting longitudinal beams 312 are located between the two middle compartment longitudinal beams 121, and threaded holes may be provided between the connecting longitudinal beam 312 and the middle compartment longitudinal beam 121, so as to facilitate detachable connection of the rear compartment body 300 and the middle compartment body 100. This improves stability of connection between the rear compartment body 300 and the middle compartment body 100, reduces assembly difficulty, and improves manufacturing efficiency for a whole vehicle.

Optionally, the rear compartment body 300 includes two rear compartment main body portions 320 spaced apart along the width direction Y, the two rear compartment main body portions 320 are connected to the rear compartment connecting portion 310, and the rear compartment main body portion 320 is provided with a fourth force-transmitting rib 330. The rear compartment main body portion 320 may be configured to mount a vehicle-mounted component such as a shock absorber or a vehicle axle of a vehicle. A shape and structure of the rear compartment main body portion 320 may be set based on actual conditions, for example, the bottom of the rear compartment main body portion 320 may be recessed upward to accommodate a structure of a vehicle such as a vehicle wheel; or the top of the rear compartment main body portion 320 may be provided with through holes to accommodate a shock absorber of a vehicle, or the like. The fourth force-transmitting rib 330 may be mainly distributed on an outer surface of the rear compartment main body portion 320, a shape and quantity of fourth force-transmitting rib 330 may be set based on actual conditions, and the fourth force-transmitting rib 330 may be randomly arranged. When the fourth force-transmitting ribs 330 is provided in plurality, the plurality of fourth force-transmitting ribs 330 may be spliced to each other, so that the fourth force-transmitting rib 330 can extend to a position close to the middle compartment body 100 from an end that is of the front compartment body 200 and that is away from the middle compartment body 100. This can enhance structural strength of the rear compartment main body portion 320 via the fourth force-transmitting rib 330, and transmit an impact force received by the rear compartment body 300 to the middle compartment body 100 and the front compartment body 200, to ultimately achieve transmission and dispersion of a crash force, improving collision energy absorption effect.

Further, the rear compartment main body portion 320 includes a rear compartment longitudinal beam 321 and a rear shock tower 322, the rear compartment longitudinal beam 321 extends along the length direction X, and the rear shock tower 322 protrudes from the rear compartment longitudinal beam 321. The rear shock tower 322 may be located on an upper side of the rear compartment longitudinal beam 321, a lower side of the rear compartment longitudinal beam 321 may be configured to mount a vehicle-mounted component such as a vehicle axle, and the rear shock tower 322 may be configured to mount a shock absorber of a vehicle. Specifically, the rear shock tower 322 may be provided with a shock absorber mounting hole, and an opening of the mounting hole faces a direction back away from the rear compartment longitudinal beam 321, facilitating mounting of the shock absorber in the mounting hole. This helps alleviate, via the shock absorber, vibration generated during vehicle travel, and improves smoothness of vehicle travel.

Further, the rear compartment connecting portion 310 and the two rear compartment main body portions 320 are integrally die-cast formed. Specifically, the third connecting cross beam 311 and the two connecting longitudinal beams 312 of the rear compartment connecting portion 310, the rear compartment longitudinal beam 321 and the rear shock tower 322 of the rear compartment main body portion 320, and the fourth force-transmitting rib 330 are all integrally die-cast formed. This can improve overall structural strength of the rear compartment body 300 and production efficiency for the rear compartment body 300. In addition, crash forces received by the vehicle frame 10 from different directions can be further transmitted and dispersed through integral die-cast forming, improving collision energy absorption effect.

In summary, with each of the front compartment body 200, the middle compartment body 100, and the rear compartment body 300 being integrally formed, manufacturing efficiency for the front compartment body 200, the middle compartment body 100, and the rear compartment body 300 can be improved by means of the integrated configuration manner, and a quantity of parts and components of the vehicle frame 10 is reduced. This reduces assembly processes such as welding and riveting during a manufacturing process, improves production efficiency, and can further improve structural strength of the front compartment body 200, the middle compartment body 100, and the rear compartment body 300. The middle compartment body 100 is connected to the front compartment body 200 and the rear compartment body 300 to form the vehicle frame 10, so that a production process chain can be shortened, flexible layout in a production workshop is facilitated, and a risk of a manufacturing error may be further alleviated in comparison with a solution of forming by assembling many parts and components. In this way, manufacturing efficiency for a whole vehicle may be improved

Finally, it should be noted that the above embodiments are only used to describe the technical solutions of this application, but not to limit them. Although this application has been described in detail with reference to the foregoing embodiments, persons of ordinary skill in the art should understand that: modifications may still be made to the technical solutions recorded in the foregoing embodiments, or equivalent replacements may be made to some or all of the technical features therein; these modifications or replacements do not make the essence of the corresponding technical solutions depart from the scope of the technical solutions of embodiments of this application, and they should all be covered within the scope of the claims and the specification of this application. In particular, any combination of the various technical features mentioned in the various embodiments may be made in any manner as long as there is no structural conflict. This application is not limited to the specific embodiments disclosed herein, but includes all technical solutions falling within the scope of the claims.

## Claims

1. A vehicle frame, **characterized in that** the vehicle frame comprises:
a front compartment body, wherein the front compartment body is integrally formed;
a rear compartment body, wherein the rear compartment body is integrally formed; and
a middle compartment body, wherein the middle compartment body is integrally formed; and in a length direction of the middle compartment body, the front compartment body and the rear compartment body are located on two sides of the middle compartment body, and the middle compartment body is connected to the front compartment body and the rear compartment body.

2. The vehicle frame according to claim 1, **characterized in that** an accommodating space and a mounting space are formed in the middle compartment body, an opening of the mounting space is provided back away from an opening of the accommodating space in a height direction of the middle compartment body, the accommodating space is used for accommodating a battery cell, and the mounting space is used for mounting a vehicle-mounted component.

3. The vehicle frame according to claim 2, **characterized in that** the middle compartment body comprises a middle compartment panel and an enclosing structure, the middle compartment panel is provided with a first surface and a second surface that are provided back away from each other in the height direction, the enclosing structure protrudes from the first surface in the height direction to form the mounting space, and the enclosing structure protrudes from the second surface in the height direction to form the accommodating space.

4. The vehicle frame according to claim 3, **characterized in that** the enclosing structure comprises two middle compartment longitudinal beams, the two middle compartment longitudinal beams extend along the length direction, the two middle compartment longitudinal beams are connected to two sides of the middle compartment panel in a width direction of the middle compartment body, and the middle compartment longitudinal beam protrudes from the first surface and the second surface in the height direction.

5. The vehicle frame according to claim 4, **characterized in that** the middle compartment longitudinal beam comprises two longitudinal plate bodies and a first force-transmitting rib, the two longitudinal plate bodies extend along the length direction, the two longitudinal plate bodies are spaced apart in the width direction, and the first force-transmitting rib is connected between the two longitudinal plate bodies.

6. The vehicle frame according to claim 5, **characterized in that** the first force-transmitting rib is provided in plurality, the plurality of first force-transmitting ribs are sequentially connected along the length direction, and each first force-transmitting rib is inclined relative to the longitudinal plate body.

7. The vehicle frame according to any one of claims 3 to 6, **characterized in that** the middle compartment body further comprises a middle compartment cross beam, the middle compartment cross beam extends along a width direction of the middle compartment body, and the middle compartment cross beam is located on the first surface and is connected to the enclosing structure.

8. The vehicle frame according to claim 7, **characterized in that** the middle compartment cross beam is provided in plurality, and the plurality of middle compartment cross beams are spaced apart along the length direction.

9. The vehicle frame according to claim 7 or 8, **characterized in that** the middle compartment cross beam comprises two transverse plate bodies and a second force-transmitting rib, the two transverse plate bodies extend along the width direction, the two transverse plate bodies are spaced apart in the length direction, and the second force-transmitting rib is connected between the two transverse plate bodies.

10. The vehicle frame according to claim 9, **characterized in that** the second force-transmitting rib is provided in plurality, the plurality of second force-transmitting ribs are sequentially connected along the width direction, and each second force-transmitting rib is inclined relative to the transverse plate body.

11. The vehicle frame according to any one of claims 7 to 10, **characterized in that** the middle compartment longitudinal beam, the middle compartment cross beam, and the middle compartment panel are integrally die-cast formed.

12. The vehicle frame according to any one of claims 1 to 11, **characterized in that** the front compartment body comprises a front compartment connecting portion, the middle compartment body comprises a middle compartment panel and two middle compartment longitudinal beams, the two middle compartment longitudinal beams extend along the length direction, the two middle compartment longitudinal beams are connected to two sides of the middle compartment panel in a width direction of the middle compartment body, and the front compartment connecting portion is connected to the middle compartment panel and the two middle compartment longitudinal beams.

13. The vehicle frame according to claim 12, **characterized in that** the front compartment connecting portion comprises a first connecting cross beam and a second connecting cross beam that are connected to each other, the first connecting cross beam and the second connecting cross beam extend along the width direction, the first connecting cross beam overlaps the middle compartment panel, and two side walls of the second connecting cross beam in the width direction abut against the two middle compartment longitudinal beams respectively.

14. The vehicle frame according to claim 12 or 13, **characterized in that** the front compartment body comprises two front compartment main body portions spaced apart along the width direction, the two front compartment main body portions are connected to the front compartment connecting portion, and the front compartment main body portion is provided with a third force-transmitting rib.

15. The vehicle frame according to claim 14, **characterized in that** the front compartment main body portion comprises a front compartment longitudinal beam and a front shock tower, the front compartment longitudinal beam extends along the length direction, and the front shock tower protrudes from the front compartment longitudinal beam.

16. The vehicle frame according to claim 14 or 15, **characterized in that** the front compartment connecting portion and the two front compartment main body portions are integrally die-cast formed.

17. The vehicle frame according to any one of claims 1 to 16, **characterized in that** the rear compartment body comprises a rear compartment connecting portion, the middle compartment body comprises a middle compartment panel and two middle compartment longitudinal beams, the two middle compartment longitudinal beams extend along the length direction, the two middle compartment longitudinal beams are connected to two sides of the middle compartment panel in a width direction of the middle compartment body, and the rear compartment connecting portion is connected to the middle compartment panel and the two middle compartment longitudinal beams.

18. The vehicle frame according to claim 17, **characterized in that** the rear compartment connecting portion comprises a third connecting cross beam and two connecting longitudinal beams, the two connecting longitudinal beams extend along the length direction, the third connecting cross beam is connected between the two connecting longitudinal beams, the third connecting cross beam overlaps the middle compartment panel, the two connecting longitudinal beams are located between the two middle compartment longitudinal beams, and one of the connecting longitudinal beams abuts against one of the middle compartment longitudinal beams.

19. The vehicle frame according to claim 17 or 18, **characterized in that** the rear compartment body comprises two rear compartment main body portions spaced apart along the width direction, the two rear compartment main body portions are connected to the rear compartment connecting portion, and the rear compartment main body portion is provided with a fourth force-transmitting rib.

20. The vehicle frame according to claim 19, **characterized in that** the rear compartment main body portion comprises a rear compartment longitudinal beam and a rear shock tower, the rear compartment longitudinal beam extends along the length direction, and the rear shock tower protrudes from the rear compartment longitudinal beam.

21. The vehicle frame according to claim 19 or 20, **characterized in that** the rear compartment connecting portion and the two rear compartment main body portions are integrally die-cast formed.

22. A vehicle frame assembly, **characterized in that** the vehicle frame assembly comprises a battery component and the vehicle frame according to any one of claims 1 to 21, and the battery component is disposed in the middle compartment body of the vehicle frame.

23. A vehicle, **characterized in that** the vehicle comprises the vehicle frame assembly according to claim 22.
